# EUROPEAN PATENT APPLICATION

(11) **EP 4 456 645 A1**
(43) Date of publication of application: **30.10.2024**
(21) Application number: 24171589.5
(22) Date of filing: 22.04.2024
(51) Int. Cl.: H04W 72/1268, H04W 72/21

(54) **METHOD AND APPARATUS OF CONTROLLING UPLINK TRANSMISSION IN WIRELESS COMMUNICATION SYSTEM**

(30) Priority: 24.04.2023 KR 20230053603; 19.12.2023 KR 20230185775
(71) Applicant: KT Corporation, Seongnam-si, Gyeonggi-do 13606 (KR)
(72) Inventor: PARK, Ki-Hyeon, Seongnam-si, Gyeonggi-do 13606 (KR)
(74) Representative: BCKIP Part mbB

(57) **Abstract**

Provides are a method and apparatus for operating a terminal and/or a base station in a wireless communication system. The method may include performing one CG-PUSCH configuration including multiple transmission occasions, configuring UTO-UCI for indicating an unused transmission occasion of the one CG-PUSCH configuration, wherein the configuring UTO-UCI for indicating the unused transmission occasion comprises: i) configuring the UTO-UCI not to allow changing from indication of a first transmission occasion of the one CG-PUSCH configuration as unused to indication of the first transmission occasion as used, or ii) configuring the UTO-UCI to allow changing from indication of a second transmission occasion of the one CG-PUSCH configuration as used to indication of the second transmission occasion as unused.

## Description

### CROSS-REFERENCE TO RELATED THE APPLICATION

This application is based on and claims priority to Patent Application No. 10-2023-0053603 filed on Apr. 24, 2023 and No. 10-2023-0185775 filed on Dec. 19, 2023 in the Korean Intellectual Property Office.

### BACKGROUND

### Technical Field

The present disclosure relates to a 5^{th} generation new radio (5G NR) system based on the 3^{rd} generation partnership project (3GPP).

### Description of the Related Art

With the increase in the number of communication devices, there is a consequent rise in communication traffic that needs to be managed. To handle this increased communication traffic, a next generation 5G system, which is an enhanced mobile broadband communication system compared to the exiting LTE system, has become necessary. Such a next generation 5G system has been developed based on scenarios which are classified into Enhanced Mobile BroadBand (eMBB), Ultra-reliability and low-latency communication (URLLC), Massive Machine-Type Communications (mMTC), and the like.

eMBB, URLLC, and mMTC are represent next generation mobile communication scenarios. eMBB is characterized by high spectrum efficiency, high user experienced data rate, high peak data. URLLC is characterized by ultra-reliable, ultra-low latency, ultra-high availability (e.g., vehicle-to-everything (V2X), Emergency Service, Remote Control). mMTC is characterized by low cost, low energy, short packet, and massive connectivity (e.g., Internet of Things (IoT)).

### SUMMARY

The disclosure is to provide a method and apparatus for controlling uplink transmission in a wireless communication system. In particular, the disclosure is to provide a method and apparatus for controlling uplink transmission when multiple configured grant (CG) - physical uplink shared channel (PUSCH) transmissions are configured (e.g., when multiple transmission occasions are configured).

According to an embodiment, a terminal (e.g., user equipment: UE) in a wireless communication system performs one configured grant (CG) - physical uplink shared channel (PUSCH) configuration including multiple transmission occasions. Further, the terminal configures unused transmission occasion (UTO)- uplink control information (UCI) for indicating an unused transmission occasion of the one CG-PUSCH configuration. The terminal may configure the UTO-UCI for indicating the unused transmission occasion i) to not allow changing from indication of a first transmission occasion of the one CG-PUSCH configuration as unused to indication of the first transmission occasion as used, or ii) to allow changing from indication of a second transmission occasion of the one CG-PUSCH configuration as used to indication of the second transmission occasion as unused.

Further, according to an embodiment, a base station in a wireless communication system performs one configured grant (CG) - physical uplink shared channel (PUSCH) configuration including multiple transmission occasions to a terminal. Further, the base station receives unused transmission occasion (UTO)-uplink control information (UCI) from the terminal, based on the configuration of the UTO-UCI for indicating the unused transmission occasion of the one CG-PUSCH configuration. The base station may configure the UTO-UCI for indicating the unused transmission occasion i) not to allow changing from indication of a first transmission occasion of one CG-PUSCH configuration as unused to indication of the first transmission occasion as used, or ii) to allow changing from indication of a second transmission occasion of the one CG-PUSCH configuration as used to indication of the second transmission occasion as unused is allowed.

Further, according to an embodiment, a communication device in a wireless communication system includes at least one processor; and at least one memory configured to store instructions and be operably electrically connectable to the at least one processor, wherein an operation performed based on the instruction executed by the at least one processor includes: performing one configured grant (CG) - physical uplink shared channel (PUSCH) configuration including multiple transmission occasions; and configuring unused transmission occasion (UTO)-uplink control information (UCI) for indicating an unused transmission occasion of the one CG-PUSCH configuration. The communication apparatus configures the UTO-UCI for indicating the unused transmission occasion i) not to allow changing from indication of a first transmission occasion of the one CG-PUSCH configuration as unused to indication of the first transmission occasion as used is not allowed or ii) to allow changing from indication of a second transmission occasion of the one CG-PUSCH configuration as used to indication of the second transmission occasion as unused is allowed.

Further, according to an embodiment, a base station in a wireless communication system includes at least one processor; and at least one memory configured to store instructions and be operably electrically connectable to the at least one processor, wherein an operation performed based on the instruction executed by the at least one processor includes: performing one configured grant (CG)- physical uplink shared channel (PUSCH) configuration including multiple transmission occasions to a terminal; and receiving unused transmission occasion (UTO)-uplink control information (UCI) from the terminal, based on the configuration of the UTO-UCI for indicating the unused transmission occasion of the one CG-PUSCH configuration. The base station may configure the UTO-UCI for indicating the unused transmission occasion i) not to allow changing from indication of a first transmission occasion of one CG-PUSCH configuration as unused to indication of the first transmission occasion as used or ii) to allow changing from indication of a second transmission occasion of the one CG-PUSCH configuration as used to indication of the second transmission occasion as unused.

The multiple transmission occasions may be included in one period. Further, the configuration of the UTO-UCI for indicating the unused transmission occasion may be based on radio resource control (RRC) signaling from a base station. Here, the RRC signaling may be to perform the one CG-PUSCH configuration.

The UTO-UCI for indicating the unused transmission occasion may be transmitted and received as included in at least one transmission occasion of the one CG-PUSCH configuration.

In addition, the terminal that transmits the UTO-UCI may support extended reality (XR).

Meanwhile, the configuration of the UTO-UCI for indicating the unused transmission occasion may be changed, and whether to allow the change in the configuration of the UTO-UCI may be based on the RRC signaling for the terminal. When the change in the configuration of the UTO-UCI is allowed, iii) change from indication of the first transmission occasion of one CG-PUSCH configuration as unused to indication of the first transmission occasion as used may be allowed, and iv) change from indication of a second transmission occasion of the one CG-PUSCH configuration as used to indication of the second transmission occasion as unused may be not allowed.

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIG. 7 illustrates exemplary uplink transmission and reception based on a configured grant (CG).
FIG. 8 illustrates exemplary uplink transmission and reception based on a CG according to an embodiment of the disclosure.
FIG. 9 is a flowchart for a method of a user equipment (UE) according to an embodiment of the disclosure.
FIG. 10 is a flowchart for an operation method of a base station according to an embodiment of the disclosure.
FIG. 11 is a block diagram showing apparatuses according to an embodiment of the disclosure.
FIG. 12 is a block diagram showing a terminal according to an embodiment of the disclosure.
FIG. 13 is a block diagram illustrating a processor in accordance with an embodiment.
FIG. 14 is a block diagram illustrating a transceiver of a first apparatus shown in FIG. 11 or a transceiver of an apparatus shown in FIG. 12.

### DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

Abase station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH (remote radio head), TP (transmission point), RP (reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4^{th} generation mobile communication, the next generation mobile communication (e.g., 5^{th} generation: also known as 5G mobile communication) has been commercialized and the follow-up studies are also ongoing.

The 5^{th} generation mobile communications, as defined by the International Telecommunication Union (ITU), provide a data transmission rate of up to 20 Gbps and a minimum actual transmission rate of at least 100 Mbps anywhere. The official name of the 5^{th} generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

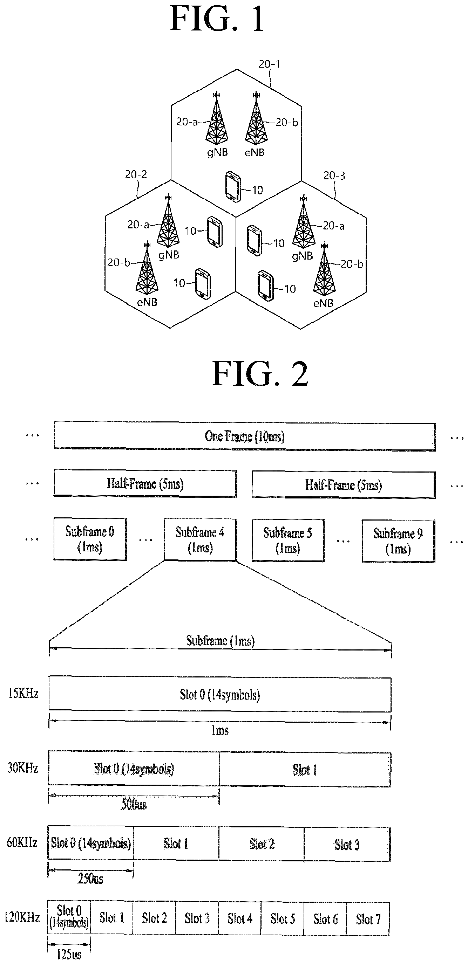

FIG. 1 is a diagram illustrating a wireless communication system.

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. Abase station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

**FIG. 2** **is a diagram illustrating a radio frame structure used in NR.**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals (e.g., user equipments). For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals (e.g., user equipments). Table 2 below shows the relationship between the subcarrier spacing, corresponding CP length, and the index of a numerology (represented by µ).

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame,µ}slot), and the number of slots per subframe (N^{subframe,µ}slot) according to each numerology expressed by µ in the case of a normal CP.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

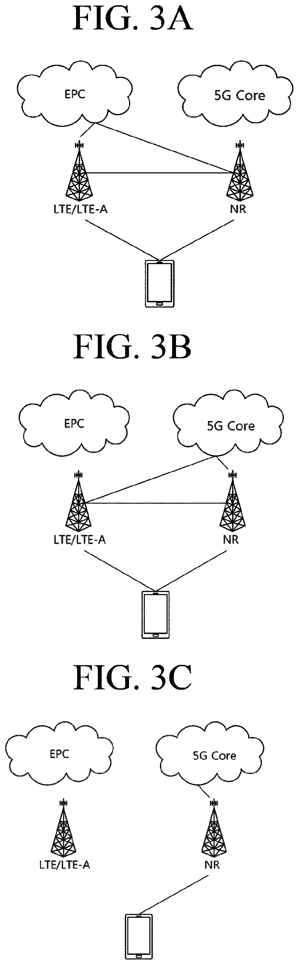

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5^{th} generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

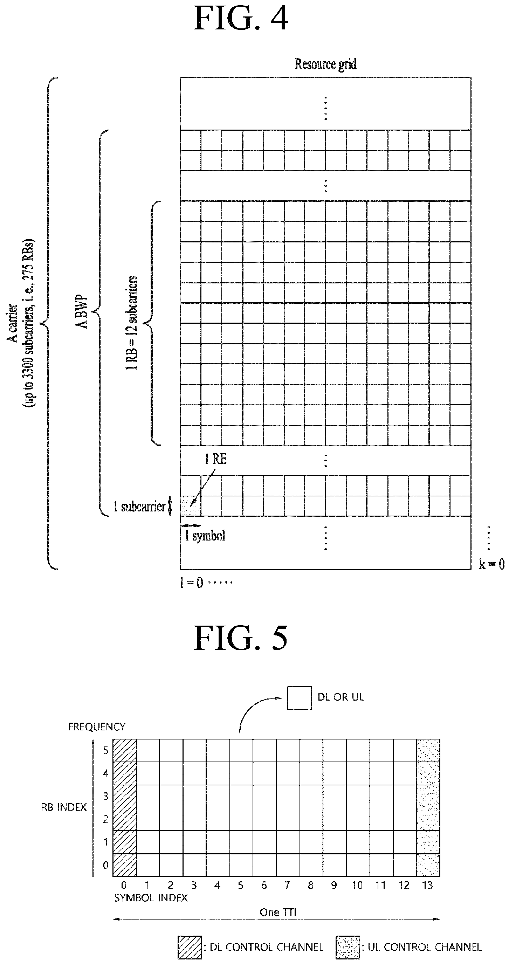

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

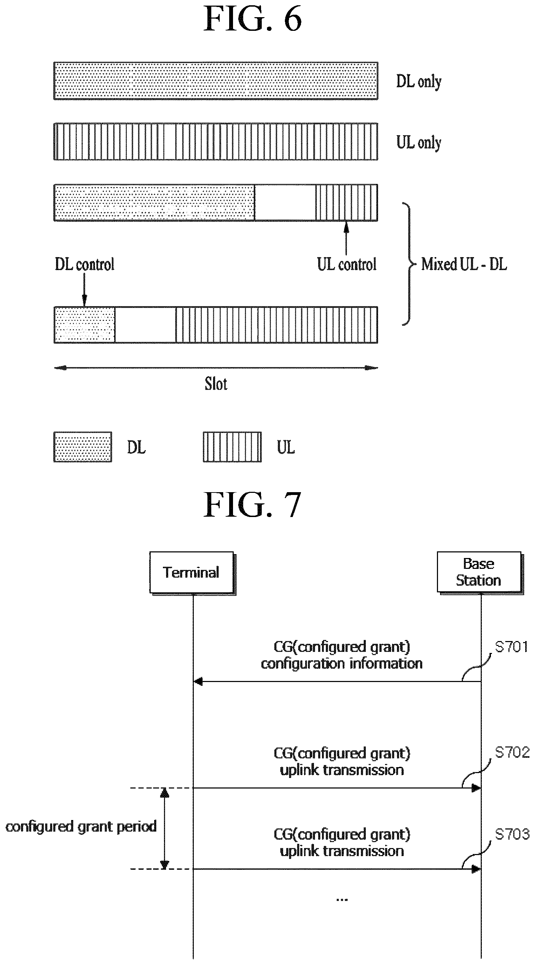

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration

- DL region + Guard Period (GP) + UL control region
- DL control region + GP + UL region

DL region: (i) DL data region, (ii) DL control region + DL data region
UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. In the PDCCH, Downlink Control Information (DCI), for example, DL data scheduling information or UL data scheduling data may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some symbols associated with the transition from DL to UL mode within a subframe may be designated as the GP.

The disclosure is to provide a method and apparatus for controlling periodic uplink transmission in 3GPP NR. In particular, the disclosure aims to introduce a control method and apparatus for improving the utilization of transmission resources during configured grant (CG)-based transmission in order to increase the transmission capacity of an extended reality (XR) terminal.

3GPP NR defines CG-based transmission for periodic uplink transmission. The CG-based transmission is broadly classified into Type 1 and Type 2, which have in common that a transmission resource type, a modulation and coding scheme (MCS) table, periodic and repeated transmission configuration, etc. are transmitted through a radio resource control (RRC) message/information of 'ConfiguredGrantConfig.' In Type 1, downlink control information (DCI) indicates information on time and frequency resources, and MCS indices. Such information are additionally configured based on the RRC message/information. Type 1 and Type 2 are categorized based on whether to retransmit, along with DCI, information regarding transmission conducted within an actually configured transmission area. Transmissions based on CG Type 1 utilize pre-configured time/frequency domains and MCS indices, even in the absence of activation DCI transmission. In contrast, transmissions based on CG Type 2 utilize the activation DCI along with time/frequency domains and MCS indices associated with the DCI. The transmissions based on CG Type2 do not occur in the absence of a corresponding DCI.

The configured grant (CG) described above is summarized as follows.
- Type 1: An uplink grant of a certain period is provided by upper layer (RRC) signaling (configured without separate first layer signaling).
- Type 2: The period of an upper grant is configured by upper layer (RRC) signaling, and an uplink grant is provided by signaling activation/deactivation of the CG configured through a PDCCH.

**FIG. 7** **is a diagram illustrating uplink transmission and reception based on a configured grant (CG).**

Referring to FIG. 7, a base station transmits CG configuration information to a terminal (e.g., user equipment) through RRC signaling (S701). The CG configuration information transmitted from the base station to the terminal may include period information for performing uplink transmission based on the CG. The terminal periodically performs the uplink transmission using the CG based on the period information included in the received CG configuration information (S702 to S703). Further, although not shown in FIG. 7, the CG uplink transmission may be repeatedly performed within the CG period. This may be based on information about the number of repetitions included in the CG configuration information.

The CG-based uplink transmission may correspond to CG transport block transmission. In the CG transport block transmission, control messages for transmitting information about HARQ ACK/NACK for downlink transmission, CSI feedback report, and configured grant-uplink control information (CG-UCI) may be sent as being multiplexed in a CG-PUSCH region. In particular, i) the control message for the HARQ ACK/NACK is allocated starting from the first symbol after the first consecutive DMRS transmission symbol, ii) the control message for the CG-UCI is allocated starting from the first symbol after the first consecutive DMRS transmission symbol, excluding the HARQ control message, and ii) the CSI control message is allocated starting from the first symbol within the PUSCH region, where the DMRS is not transmitted, except the HARQ control message and the CG-UCI control message. The CG-UCI for the CG carries information as follows.
- 4bits of HARQ process number
- 2bits of redundancy version (RV)
- 1bit of new data indicator (NDI)
- Predefined bits of channel occupancy time (COT) sharing information for NR-unlicensed (U)

Meanwhile, as work items for NR Release 18, XR Enhancements for NR (NR_XR_Enh) for increasing the capacity according to service traffic characteristics of XR terminals are scheduled to be completed in December 2023, and those work items have objectives as shown in Table 5 below.

**[Table 5]**

| |
|---|
| 1 Specify the enhancements related to power saving: |
| - DRX support of XR frame rates corresponding to non-integer periodicities (through at least semi-static mechanisms e.g. RRC signaling) (RAN2) |
| 2. Specify the enhancements related to capacity: |
| - Multiple CG PUSCH transmission occasions in a period of a single CG PUSCH configuration (RAN1, RAN2); |
| - Dynamic indication of unused CG PUSCH occasion(s) based on UCI by the UE (RAN1); |
| - BSR enhancements including at least new BS Table(s); (RAN2); |
| - Delay reporting of buffered data in uplink; (RAN2); |
| - Provision of XR traffic assistance information for DL and UL (e.g. periodicity); (RAN2); |
| - Discard operation of PDU Sets (RAN2); |
| 3. Specify the enhancements for XR Awareness (RAN2, RAN3): TBD (detailed objectives will be further clarified at RAN#99 based on the conclusions of TR38.835, and work to be started only after RAN#99) |

In the typical NR CG, only one transport block can be designated in the period, and the configuration is performed in such a manner that i) a short period and a large transmission area are predefined for a large average amount of data in the period and ii) a long period and a small transmission area are predefined for a small average amount of data in the period. Further, the typical NR CG has been operated to perform the repeated transmission additionally a predefined number of times according to uplink channel environments. However, it is difficult for the typical NR CG to deal with a variable average transmission area such as a video stream of XR. Therefore, there has been proposed a method of allowing a single CG to secure multiple PUSCH transmission areas (see the objective 2 in Table 5, "Multiple CG PUSCH transmission occasions in a period of a single CG PUSCH configuration (RANI, RAN2)")
However, such a proposed method still has a problem of difficulty in dynamic reallocation when the previously allocated area is not required to be used. Therefore, another method has been proposed to indicate an area, which is not used for actual transmission among previously allocated areas, by a terminal so that the indicated area can be used for other transmissions (see the objective 2 in Table 5, "Dynamic indication of unused CG PUSCH occasion(s) based on UCI by the UE (RAN)").

In this regard, several options have been discussed at the standardization meeting, but details (e.g., transmission methods, formats, etc.) have not yet been specified.

Accordingly, the disclosure provides a method and apparatus for configuring uplink control information (UCI) for indicating the transmission of the unused PUSCH information (e.g., the unused transmission occasions of the CG PUSCH by an actual terminal when multiple CG PUSCH transmissions for CG-based transmission are configured in an NR uplink transmission environment.

Further, the present disclosure provides a method of a base station that has received the UCI for indicating the unused transmission occasions of the CG PUSCH (hereinafter referred to as "unused transmission occasion (UTO)-UCI"). In particular, there is provided a method of processing a PUSCH occasion transmission space, which is indicated by the UTO-UCI as unused (e.g., CG PUSCH transmission occasions).

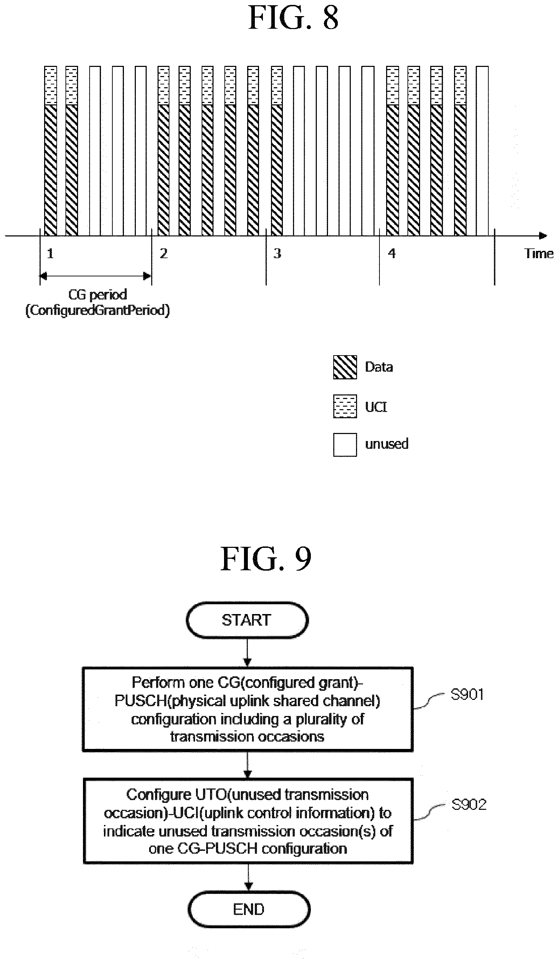

**FIG. 8** **is a diagram for illustrating uplink transmission and reception based on a CG according to an embodiment.**

Referring to FIG. 8, uplink transmission (e.g., CG-PUSCH transmission) is performed based on a configured grant period ConfiguredGrantPeriod. Here, the UCI (or CG-UCI) may be transmitted as multiplexed or piggybacked in a resource (or grant) for CG-PUSCH transmission. FIG. 8 illustrates five transmission occasions per CG period. Among five transmission occasions, there may be unused transmission occasions, which are not used in transmission. For example, FIG. 8 shows three unused transmission occasions within the first CG period, no unused transmission occasions within the second CG period, four unused transmission occasions within the third CG period, and one unused transmission occasion within the fourth CG period.

According to an embodiment, the UCI indicating the unused transmission occasion (UTO) is referred to as the UTO-UCI, but may also be referred to as another name having the same technical meaning. Further, according to an embodiment, the foregoing transmission occasion (TO) may be used having the same meaning as an occasion.

Meanwhile, CG period information and information about the number of transmission occasions within the CG period may be included in CG configuration information transmitted to the terminal by the base station. Here, the CG configuration information may be transmitted to the terminal through a radio resource control (RRC) message/information. Each transmission occasion in one CG period may be repetitively transmitted, which may be based on information about the number of repetitions. The information about the number of repetitions may also be included in the CG configuration information transmitted to the terminal by the base station as described above.

Hereinafter, embodiments introduced in the disclosure will be described.

The embodiments will be described based on i) how to process the existing transmission resources, ii) how to process the present transmission resources, iii) how to process the future transmission resources, and iv) how to process transmission resources when transmission information is changed during processing.

### First embodiment: how to process existing transmission resources

The first embodiment is about an operation method when a CG PUSCH occasion occurring prior to the transmission of UTO-UCI is indicated/transmitted as unused. This method may include a method of discarding a transport block (method 1-1), a method of reconfiguring HARQ ID (method 1-2), and a method of ignoring corresponding information in a corresponding UTO-UCI message (method 1-3). Further, the operation method may include an additional method of determining the operations of the base station (method 1-4). This additional method is for how the base station selects the methods 1-1 to 1-3 based on situations and informs the terminal (e.g., user equipment) of the selected method.

Hereinafter, the methods of the first embodiments will be described in detail.

### Method 1-1: Method of discarding transport block (TB)

When a CG PUSCH occasion in a slot preceding a slot designated for transmitting the UTO-UCI is transmitted (e.g., indicated) as unused, a TB transmitted as a corresponding TB is discarded. In other words, even though the base station successfully receives data at this CG PUSCH occasion, it is not processed as a valid block, i.e., a valid TB. Further, HARQ-ACK/NACK related feedback on this TB may not be performed, or the terminal ignores information about the feedback and does process the information even through the feedback is performed.

### Method 1-2: Method of reconfiguring HARQ identity (ID)

When a CG PUSCH occasion in a slot preceding a slot designated for transmitting the UTO-UCI is transmitted/indicated as unused, a HARQ process ID is configured for each transmission block after the CG PUSCH occasion. In particular, if each HARQ process ID is assigned with an increment of '1' for each valid transmission block, the base station does not increase the HARQ process ID for a transmission block (e.g., a corresponding TB) received at a CG PUSCH occasion indicated as unused, even though data is successfully received at the corresponding occasion. For example, when starting HARQ process ID is `1,' and the 3^{rd}, and 7^{th} occasions are indicated as unused in the 6^{th} occasion among the 1^{st} to 8^{th} occasions, the base station determines and assigns the HARQ process ID for the respective 1^{st} to 8^{th} occasions with `1,' `2,' `X,' `3,' `4,' `5,' 'X,' and '6.'

### Method 1-3: Method of ignoring corresponding information in corresponding UTO-UCI message

When a CG PUSCH occasion in a slot preceding a slot for transmitting the UTO-UCI is transmitted/indicated as unused, information transmitted through the UTO-UCI is ignored. For example, the terminal transmits the UTO-UCI at the k^{th} occasion by padding the first k-1 bits with '0' or '1' among bits for transmitting the unused occasion when configuring the UTO-UCI. In this way, the probability of detecting errors is improved. Therefore, under these situations, the base station may not ignore or discard a previous reception PUSCH even though the PUSCH is indicated as unused.

### Method 1-4: Method of determining operations of base station

The base station notifies the terminal in advance about the operation of the previously mentioned methods 1-1 to 1-3. For example, the base station may use an RRC message/information to inform the terminal how to process the configuration of the unused occasions for the past block (e.g., TB) when configuring the CG having multiple PUSCH occasions. For example, the operation of the base station may be indirectly communicated in the form of indicating the padding. In this case, when the padding is indicated as described in the method 1-3, the terminal may expect the base station to operate as described in the method 1-3. On the other hand, when the padding is not indicated as described in the method 1-3, the terminal may expect the base station to operate as described in the method 1-1 and/or the method 1-2. As another example, the operation of the base station may be implicitly determined based on the periods of the CG, the number of times at repeated transmission, the number of occasions, retransmission timer, or the like value.

### Second embodiment: How to process present transmission resources

The second embodiment is about an operation method when a CG PUSCH occasion, multiplexed at the time of UTO-UCI transmission, is transmitted/indicated as unused. The operation method may include a method of discarding a transmission block (method 2-1), a method of reconfiguring HARQ ID (method 2-2), and a method of ignoring information in a UTO-UCI message (method 2-3). Further, the operation method may include an additional method of determining the operations of the base station (method 2-4) as how the base station selects the methods 2-1 to 2-3 based on situations and informs the terminal of the selected method.

### Method 2-1: Method of discarding transmission block (TB)

When a CG PUSCH occasion within the same slot designated for transmitting the UTO-UCI is transmitted (e.g. indicated) as unused, a corresponding transmitted TB is discarded. In other words, even though the base station successfully receives data at the CG PUSCH occasion, it is not processed as a valid block. Further, HARQ-ACK/NACK feedback may not be performed for this TB, or the terminal may ignore information about the feedback and does process the information even through the feedback is performed.

### Method 2-2: Method of reconfiguring HARQ ID

Like the method 1-2 of the first embodiment, when a CG PUSCH occasion within the same slot designated for transmitting the UTO-UCI is transmitted as unused, a HARQ process ID is configured for each transmission block after the CG PUSCH occasion. In particular, when each HARQ process ID is assigned with an increment of ` 1' for each valid transmission block, the base station does not increase a HARQ process ID for a transmission block (e.g., TB) received at a CG PUSCH occasion indicated as unused, even though data is successfully received at the corresponding occasion. For example, when starting HARQ process ID is `1,' and the 3^{rd} and 7^{th} occasions are indicated as unused in the 3^{rd} occasion among the 1^{st} to 8^{th} occasions, the base station determines and assigns the HARQ process ID for the respective 1^{st} to 8^{th} occasions with `1,' '2,' 'X,' '3,' '4,' '5,' 'X,' and '6.'

### Method 2-3: Method of ignoring information in UTO-UCI message

When a CG PUSCH occasion in the same slot designated for transmitting the UTO-UCI is transmitted as unused, the terminal transmits the UTO-UCI at the k^{th} occasion by padding the first k bits with '0' or '1' among bits for transmitting the unused occasion when configuring the UTO-UCI. In this way, error detection probability is improved. Therefore, under these situations, the base station may not ignore or discard a previous reception PUSCH even though the PUSCH is indicated as unused.

### Method 2-4: Method of determining operations of base station

The base station notifies the terminal in advance about that the operation of the methods 2-1 to 2-3. For example, the base station may use an RRC message/information to inform the terminal how to process the configuration of the unused occasions for the present block when configuring the CG having multiple PUSCH occasions. For example, the operation of the base station may be indirectly communicated in the form of indicating the padding. In this case, when the padding is indicated as described in the method 2-3, the terminal may expect the base station to operate as described in the method 2-3. On the other hand, when the padding is not indicated as described in the method 1-3, the terminal may expect the base station to operate as described in the method 2-1 and/or the method 2-2. As another example, the operation of the base station may be implicitly determined based on the periods of the CG, the number of times at repeated transmission, the number of occasions, retransmission timer, or the like value. As another example, the operation of the base station may be determined based on a location where the unused transmission occasion is indicated among multiple occasions. For example, when a message is transmitted at the first unused PUSCH occasion, the base station does not receive that block. When a message is transmitted at occasion(s) after the first unused PUSCH occasion, the base station may receive that block.

### Third embodiment: How to process transmission resources

The third embodiment is about an operation method when a CG PUSCH occasion, occurring later than the transmission of UTO-UCI, is transmitted as unused. The operation method according to the third embodiment may include a method of reconfiguring HARQ ID (method 3-1) and a method of receiving a UTO-UCI message in a CG PUSCH occasion previously transmitted as unused (method 3-2).

### Method 3-1: Method of reconfiguring HARQ ID

Like the method 1-2 of the first embodiment and/or the method 2-2 of the second embodiment, when a CG PUSCH occasion is transmitted by UTO-UCI as unused, a HARQ process ID is configured for each transmission block after the transmitted unused CG PUSCH occasion. In particular, when the HARQ process ID is assigned with an increment of '1' for each valid transmission block, the base station does not increase a HARQ process ID for a transmission block (e.g., TB) received at a CG PUSCH occasion indicated as unused, even though data is successfully received at the corresponding CG PUSCH occasion. For example, when starting HARQ process ID is '1,' and the 3^{rd} and 7^{th} occasions are indicated as unused in the 2^{nd} occasion among the 1^{st} to 8^{th} occasions, the base station determines and assigns the HARQ process ID for the respective 1^{st} to 8^{th} occasions with '1,' '2,' 'X,' '3,' '4,' '5,' 'X,' and '6.'

### Method 3-2: Method of receiving UTO-UCI message in CG PUSCH occasion previously transmitted as unused

A control message such as UTO-UCI is received in a CG PUSCH occasion previously transmitted as unused. For example, the UTO-UCI may not be transmitted and received in the CG PUSCH occasion previously transmitted as unused. As another example, the UTO-UCI may always be transmitted and received despite the CG PUSCH occasion previously transmitted as unused. As another example, the UTO-UCI may always be transmitted and received only when there is another UCI to be transmitted in the CG PUSCH occasion previously transmitted as unused (e.g., when there is HARQ feedback or CG-UCI, or CSI feedback).

### Fourth embodiment: How to process transmission resources when transmission information is changed during processing

The fourth embodiment is about operation methods for the base station and the terminal when one CG period include UTO-UCI transmittable multiple occasions and a corresponding field value changes. The operation methods according to the fourth embodiment includes a processing method when the occasion instructed not to be used is changed to be used), and a processing method when the occasion instructed to be used is changed not to be used.

### Method 4-1: Processing method for when instruction is changed from 'unused' to `used'

The operation method when a CG PUSCH occasion in UTO-UCI is transmitted as unused and then the CG PUSCH occasion in the UTO-UCI is transmitted as used. For example, the base station may always replace previous information with the latest information. In other words, instructions in previous UTO-UCI may be always overwritten with instructions of new UTO-UCI, with respect to whether to transmit the present or future CG PUSCH occasion (e.g., whether to instruct the CG PUSCH occasion to be used or unused). As another example, the base station ignores such a type of transmission (e.g., transmission of a CG PUSCH occasion by UTO-UCI as used after transmission of the CG PUSCH occasion by the UTO-UCI as unused). In this way, resources newly scheduled in that area may be protected. As still another example, when CG is configured through RRC, it may be instructed whether or not to allow such a type of change (e.g., transmission of a specific CG PUSCH occasion by UTO-UCI as used after transmission of that CG PUSCH occasion by the UTO-UCI as unused).

### Method 4-2: Processing method when instruction is changed from 'used' to 'unused'

This operation method is performed when a CG PUSCH occasion in UTO-UCI is transmitted as used and then the CG PUSCH occasion in the UTO-UCI is transmitted as unused. Similarly to the method 4-1, the base station may operate always replaces previous information with the latest information, ignore such a type of transmission, or indicate whether to allow or not allow such a type of change when configuring CG through RRC. When the base station may operate always replaces previous information with the latest information, the methods according to the first to third embodiments may be introduced (e.g., performed) according to newly indicated locations of UTO-UCI. At this time, a different operation may be performed based on no change. For example, an operation method for the past occasion area that have been indicated as unused may be performed in the form of ignoring the reception of that occasion, and an operation for the past occasion area that have been indicated as used may be performed in the form of receiving that occasion.

### Method 4-3: Method of indicating third state

This method indicates and processes a third state that cannot be designated as used/unused for the past, present or future PUSCH occasion. For example, when UTO-UCI is transmitted, it may be additionally transmitted whether or not that transmission information can be changed in a later occasion. Further, information that indicates an area/occasion where the transmission may or may not be performed (e.g., means flexibility may be indicated). Further, state change to 'used/unused' may be allowed only in the occasion of such a flexible state. Whether to perform such a later change or whether to add the flexible information to the UTO-UCI may be additionally defined and indicated in a CG configuration RRC message /information.

The methods according to the embodiments may be applied independently of each other. Or, the embodiments according to the embodiments may be combined in any form. Further, new terms introduced in the present disclosure are arbitrary names, chosen for their ease of understanding. The content of the disclosure remains applicable, even if alternative terms with equivalent meanings are used in practice.

### <Summary of Embodiments>

**FIG. 9** **is a flowchart for an operation method of a terminal according to an embodiment of the disclosure.**

Referring to FIG. 9, the terminal (e.g., user equipment) performs one configured grant (CG) - physical uplink shared channel (PUSCH) configuration including the multiple transmission occasions (S901). One CG-PUSCH configuration performed by the terminal may be performed with reference to configuration information from the base station, in which the configuration information from the base station may be CG configuration information. Here, the multiple transmission occasions may be configured to be included in one period.

Further, the terminal configures unused transmission occasion (UTO) - uplink control information (UCI) for indicating the unused transmission occasion of one CG-PUSCH configuration (S902). Here, the configuration of the UTO-UCI for indicating the unused transmission occasion may be configuration that i) does not allow to change from indication of a first transmission occasion of one CG-PUSCH configuration as unused to indication of the first transmission occasion as used, and ii) allows to change from indication of a second transmission occasion of the one CG-PUSCH configuration as used to indication of the second transmission occasion as unused. The configuration of the UTO-UCI for indicating the unused transmission occasion may be based on radio resource control (RRC) signaling from the base station, in which the RRC signaling may be to apply the one CG-PUSCH configuration to the terminal.

Then, the terminal may transmit the UTO-UCI for indicating the unused transmission occasion of the CG-PUSCH to the base station. In this case, the UTO-UCI may be transmitted as included in at least one transmission occasion of the one CG-PUSCH configuration. In addition, the terminal that performs such operations may support extended reality (XR).

Meanwhile, the configuration of the UTO-UCI for indicating the unused transmission occasion may be changed, and whether to allow the change in the configuration of the UTO-UCI may be based on the RRC signaling from the base station. Here, when the change in the configuration of the UTO-UCI is allowed, iii) change from indication of the first transmission occasion of one CG-PUSCH configuration as unused to indication of the first transmission occasion as used may be allowed, and iv) change from indication of a second transmission occasion of the one CG-PUSCH configuration as used to indication of the second transmission occasion as unused may be not allowed.

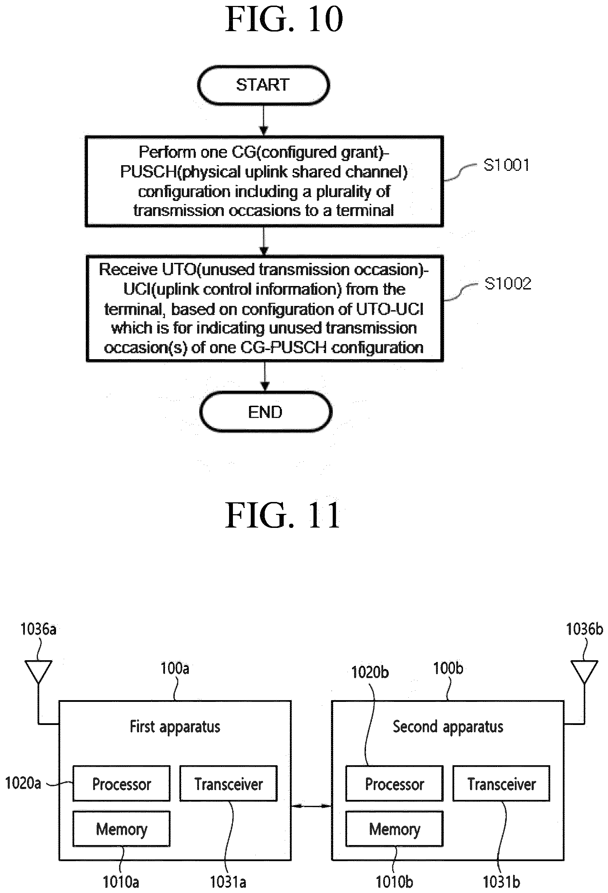

**FIG. 10** **is a flowchart for an operation method of a base station according to an embodiment of the disclosure.**

Referring to FIG. 10, the base station performs one configured grant (CG)- physical uplink shared channel (PUSCH) configuration including the multiple transmission occasions to the terminal (S1001). One CG-PUSCH configuration performed to the terminal by the base station is based on configuration information transmitted from the base station, in which the configuration information from the base station may be CG configuration information. Here, the multiple transmission occasions may be configured to be included in one period.

Then, the base station may receive the UTO-UCI from the terminal, based on the configuration of unused transmission occasion (UTO)-uplink control information (UCI) for indicating the unused transmission occasion of the one CG-PUSCH configuration (S 1002). Here, the configuration of the UTO-UCI for indicating the unused transmission occasion may be configuration that i) does not allow to change from indication of a first transmission occasion of one CG-PUSCH configuration as unused to indication of the first transmission occasion as used, and ii) allows to change from indication of a second transmission occasion of the one CG-PUSCH configuration as used to indication of the second transmission occasion as unused is allowed. The configuration of the UTO-UCI for indicating the unused transmission occasion may be based on radio resource control (RRC) signaling from the base station, in which the RRC signaling may be to apply the one CG-PUSCH configuration to the terminal.

Meanwhile, the UTO-UCI may be received as included in at least one transmission occasion of the one CG-PUSCH configuration. In addition, the terminal that transmits the UTO-UCI may support extended reality (XR).

Meanwhile, the configuration of the UTO-UCI for indicating the unused transmission occasion may be changed, and whether to allow the change in the configuration of the UTO-UCI may be based on the RRC signaling for the terminal. Here, when the change in the configuration of the UTO-UCI is allowed, iii) change from indication of the first transmission occasion of one CG-PUSCH configuration as unused to indication of the first transmission occasion as used may be allowed, and iv) change from indication of a second transmission occasion of the one CG-PUSCH configuration as used to indication of the second transmission occasion as unused may be not allowed.

The embodiments described up to now may be implemented through various means. For example, the embodiments may be implemented by hardware, firmware, software, or a combination thereof. Details will be described with reference to the accompanying drawings.

**FIG. 11** **is a block diagram showing apparatuses according to an embodiment of the disclosure.**

Referring to FIG. 11, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 103 1a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

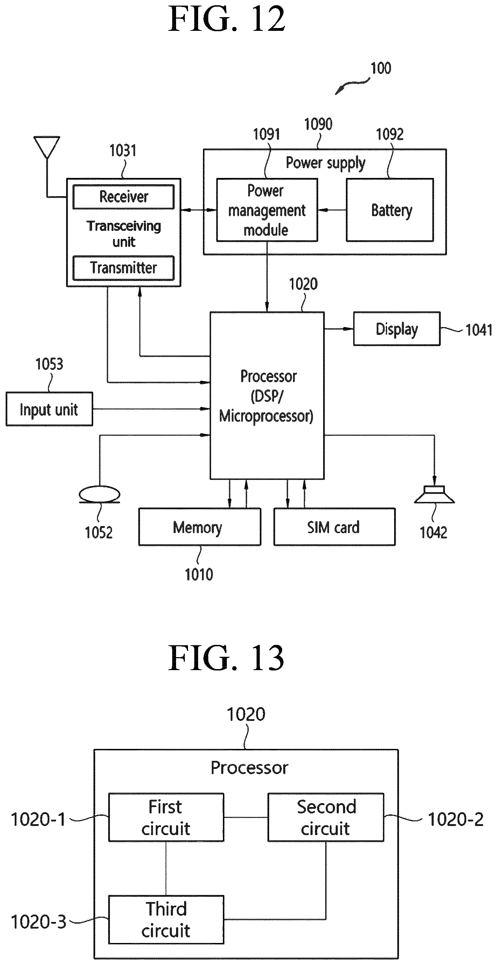

**FIG. 12** **is a block diagram showing a terminal according to an embodiment of the disclosure.**

In particular, FIG. 12 illustrates the previously described apparatus of FIG. 11 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

**FIG. 13** **is a block diagram of a processor in accordance with an embodiment.**

Referring to FIG. 13, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

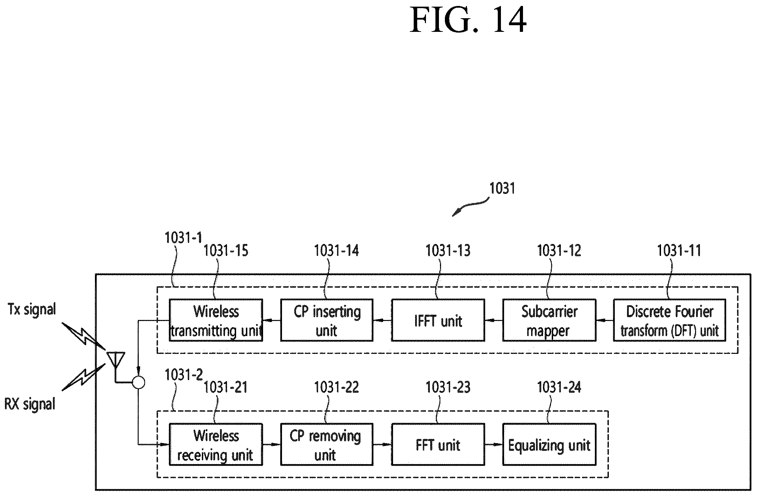

**FIG. 14** **is a detailed block diagram of a transceiver of a first apparatus shown in** **FIG. 11** **or a transceiving unit of an apparatus shown in** **FIG. 12****.**

Referring to FIG. 14, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure of the present specification, when multiple configured grant (CG)- physical uplink shared channel (PUSCH) transmissions are configured in a wireless communication system, in other words, when multiple transmission occasions are configured, the uplink resources are efficiently managed.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of operating a terminal in a wireless communication system, the method comprising:
performing one configured grant (CG) - physical uplink shared channel (PUSCH) configuration comprising multiple transmission occasions; and
configuring unused transmission occasion (UTO) - uplink control information (UCI) for indicating an unused transmission occasion of the one CG-PUSCH configuration,
wherein the configuring UTO-UCI for indicating the unused transmission occasion comprises: i) configuring the UTO-UCI not to allow changing from indication of a first transmission occasion of the one CG-PUSCH configuration as unused to indication of the first transmission occasion as used, or ii) configuring the UTO-UCI to allow changing from indication of a second transmission occasion of the one CG-PUSCH configuration as used to indication of the second transmission occasion as unused.

2. The method of claim 1, wherein the multiple transmission occasions are included in one period.

3. The method of claim 1 or 2, wherein the configuration of the UTO-UCI for indicating the unused transmission occasion is based on radio resource control (RRC) signaling from a base station.

4. The method of claim 3, wherein the RRC signaling is used to perform the one CG-PUSCH configuration.

5. The method of any one of claims 1 to 4, wherein the UTO-UCI for indicating the unused transmission occasion is transmitted as included in at least one transmission occasion of the one CG-PUSCH configuration.

6. The method of any one of claims 1 to 5, wherein
whether to allow change in the configuration of the UTO-UCI for indicating the unused transmission occasion is based on radio resource control (RRC) signaling from a base station, and
the configuring the UTO-UCI to allow further comprises iii) allowing to change from indication of the first transmission occasion of one CG-PUSCH configuration as unused to indication of the first transmission occasion as used, and/or iv) not allowing to change from indication of a second transmission occasion of the one CG-PUSCH configuration as used to indication of the second transmission occasion as unused.

7. A method of operating a base station in a wireless communication system, the method comprising:
performing one configured grant (CG) - physical uplink shared channel (PUSCH) configuration comprising multiple transmission occasions to a terminal; and
receiving unused transmission occasion (UTO) -uplink control information (UCI) from the terminal, based on the configuration of the UTO-UCI for indicating the unused transmission occasion of the one CG-PUSCH configuration,
wherein the configuring UTO-UCI for indicating the unused transmission occasion comprises i) configuring the UTO-UCI not to allow changing from indication of a first transmission occasion of one CG-PUSCH configuration as unused to indication of the first transmission occasion as used, or ii) configuring the UTO-UCI to allow changing from indication of a second transmission occasion of the one CG-PUSCH configuration as used to indication of the second transmission occasion as unused is allowed.

8. The method of claim 7, wherein the multiple transmission occasions are included in one period.

9. The method of claim 7 or 8, wherein the configuration of the UTO-UCI for indicating the unused transmission occasion is based on radio resource control (RRC) signaling for the terminal.

10. The method of claim 9, wherein the RRC signaling is used to perform the one CG-PUSCH configuration to the terminal.

11. The method of any one of claims 7 to 10, wherein the UTO-UCI for indicating the unused transmission occasion is received as included in at least one transmission occasion of the one CG-PUSCH configuration.

12. The method of any one of claims 7 to 11, wherein
whether to allow change in the configuration of the UTO-UCI for indicating the unused transmission occasion is based on radio resource control (RRC) signaling for the terminal, and
the configuring the UTO-UCI to allow further comprises iii) allowing to change from indication of the first transmission occasion of one CG-PUSCH configuration as unused to indication of the first transmission occasion as used, and/or iv) not allowing to change from indication of a second transmission occasion of the one CG-PUSCH configuration as used to indication of the second transmission occasion as unused.

13. A communication device in a wireless communication system, the communication device comprising:
at least one processor; and
at least one memory configured to store instructions and be operably electrically connectable to the at least one processor, wherein an operation performed based on the instruction executed by the at least one processor comprises:
performing one configured grant (CG) - physical uplink shared channel (PUSCH) configuration comprising multiple transmission occasions, and
configuring unused transmission occasion (UTO) - uplink control information (UCI) for indicating an unused transmission occasion of the one CG-PUSCH configuration,
wherein the configuring UTO-UCI for indicating the unused transmission occasion comprises i) configuring the UTO-UCI not to allow changing from indication of a first transmission occasion of the one CG-PUSCH configuration as unused to indication of the first transmission occasion as used, and ii) configuring the UTO-UCI to allow changing from indication of a second transmission occasion of the one CG-PUSCH configuration as used to indication of the second transmission occasion as unused is allowed.

14. The communication device of claim 13, wherein the multiple transmission occasions are included in one period.

15. The communication device of claim 13 or 14, wherein the configuration of the UTO-UCI for indicating the unused transmission occasion is based on radio resource control (RRC) signaling from a base station.
